# EUROPÄISCHE PATENTSCHRIFT

(11) **EP 3 235 621 B1**
(45) Veröffentlichungstag und Bekanntmachung des Hinweises auf die Patenterteilung: **28.11.2018**
(21) Anmeldenummer: 17166041.8
(22) Anmeldetag: 11.04.2017
(51) Int. Cl.: B29C 45/16, B29D 29/10

(54) **VERFAHREN ZUR HERSTELLUNG EINES ENDLOSEN TREIBRIEMENS**
METHOD FOR PRODUCING A CONTINUOUS TRANSMISSION BELT
PROCÉDÉ DE FABRICATION D'UNE COURROIE DE TRANSMISSION CONTINUE

(30) Priorität: 22.04.2016 DE 102016107556
(43) Veröffentlichungstag der Anmeldung: 25.10.2017
(73) Patentinhaber: Arntz Beteiligungs GmbH & Co. KG, 37671 Höxter (DE)
(72) Erfinder: MICHEL, Frank, 33034 Brakel (DE); SCHULTE, Sven, 37619 Bodenwerder (DE); MIKUS, Frank, 33014 Bad Driburg (DE)
(74) Vertreter: Lins, Martina

(56) Entgegenhaltungen:
- DE-A1- 1 964 090
- GB-A- 2 234 200
- JP-A- 2003 025 372
- JP-A- 2003 251 706
- JP-A- 2004 345 263
- US-A- 3 813 197

## Beschreibung

Die Erfindung betrifft ein Verfahren zur Herstellung eines ringförmigen, in einer Laufrichtung endlosen Treibriemens mit einer radial äußeren Deckschicht aus einem ersten Material, einer Zugstranglage mit in Laufrichtung ausgerichteten Zugsträngen und einem aus einem zweiten Material, das ein Elastomer ist, bestehenden Unterbau, der zur Anlage an passenden Scheiben eines Antriebs ausgebildet ist, wobei zunächst die Zugstränge auf das erste Material aufgebracht werden und anschließend der Unterbau aus dem zweiten Material in einer Spritzgussform geformt und vernetzt wird.

Treibriemen der hier angesprochenen Art sind insbesondere Keilriemen und Keilrippenriemen.

Derartige Treibriemen werden seit vielen Jahren in großer Anzahl hergestellt. Das dabei übliche Verfahren sieht vor, zunächst Halbzeuge herzustellen, die insbesondere Elastomermaterialien in Form von Elastomerfolien und die Zugstränge enthalten. Auf einer speziellen Konfektionsmaschine wird dabei ein Rohwickel hergestellt. Anschließend findet die Vernetzung, insbesondere Vulkanisation, in einem Vulkanisationskessel statt. Dabei kann der Kessel eine profilierte Form aufweisen, sodass bei der Vulkanisation eine gewünschte Formgebung stattfindet. Auf diese Weise kann die Trapezform eines Keilriemens oder auch die Profilierung der Oberseite eines Keilrippenriemens erreicht werden. Alternativ wird die Vulkanisation in einem nicht profilierten Kessel durchgeführt und nachträglich eine Profilbildung durch Schleifen hergestellt. Das letztgenannte Verfahren ist aufwendiger, erlaubt aber eine höhere Fertigungsgenauigkeit.

Die bekannten, seit Jahren verwendeten Herstellungsverfahren erfordern somit mehrere Verfahrensschritte, die einen gewissen Mindestaufwand mit sich bringen. Es besteht daher seit Jahren das Bedürfnis, die Herstellung derartiger Treibriemen zu rationalisieren.

In der DE 1 964 090 A ist bereits vorgeschlagen worden, einen endlosen Treibriemen in einer Spritzgussform zu fertigen. Hierzu wird um einen Ringdorn eine Deckschicht aus einem Gewebematerial gewickelt und ein hochelastisches gummiähnliches Material konzentrisch auf die Gewebeschicht aufgewickelt, bevor es teilweise geschmolzen und verbunden wird. Danach wird eine Schnur als Zugstrang spiralförmig um die Schicht gelegt. Der so vorbereitete Rohwickel wird dann in eine Spritzgussform eingelegt, die parallel zu der Längsebene des Ringdorns längs geteilt ist. Beim Schließen der Formteile entsteht radial außen von dem Rohwickel eine Kavität, beispielsweise in Keilform, in die das Material für den Unterbau eingespritzt wird. Der Unterbau wird somit im Spritzgussverfahren hergestellt und das Material kann in der Form vulkanisiert werden. Dieses bekannte Verfahren erfordert ein umständliches Hantieren des auf den Ringdorn aufgebrachten Rohwickels und ein manuelles Einlegen des auf den Ringdorn aufgebrachten Rohwickels in die relativ kompliziert aufgebaute Spritzgussform. Trotz der Verwendung eines an sich einfacheren Spritzgussverfahrens hat sich gegenüber den herkömmlichen Herstellungsverfahren keine Verbesserung ergeben, sodass der Aufwand für eine Spritzgussvorrichtung nicht gerechtfertigt war.

JP2003025372 zeigt ein Verfahren zur Herstellung eines Treibriemens mit einer radial äußeren Deckschicht, einer Zugstranglage und einem Unterbau. Ein Kern wird dabei zunächst in eine Spritzgussform gelegt um den Unterbau zu formen, danach werden die Zugstränge in einem separaten Spinnprozess auf dem Unterbau gebracht. In einem letzten Schritt wird die Deckschicht in einer weiteren Spritzgussform aufgebracht. Der Treibriemen entsteht in einem Endbearbeitungsschritt durch Zuschneiden des Verbunds.

Der vorliegenden Erfindung liegt die Aufgabe zugrunde, die Herstellung eines Treibriemens der eingangs erwähnten Art zu vereinfachen und dadurch preiswerter zu gestalten.

Zur Lösung dieser Aufgabe ist erfindungsgemäß das Verfahren der eingangs erwähnten Art dadurch gekennzeichnet, dass ein Kern mit einer Transporteinrichtung verbunden wird,
dass auf den Kern die Deckschicht und die Zugstränge der Zugstranglage aufgebracht werden,
dass mit der Transporteinrichtung der Kern schrittweise in wenigstens zwei Bearbeitungsstationen transportiert wird,
dass eine der Bearbeitungsstationen die Spritzgussform ist, die mit zwei halbkreisförmigen, beiderseits des eingeführten Kerns positionierten zylindrischen Formhälften mit an ihren axialen Enden angebrachten halbringförmigen Dichtflächen gebildet ist, dass durch das Schließen der Spritzgussform die Dichtflächen abdichtend an entsprechenden Dichtflächen des Kerns dichtend angelegt werden, wodurch eine Kavität zur Bildung des Unterbaus gebildet wird,
dass durch Spritzgießen des zweiten Materials in die Kavität ein den Unterbau aufweisender Wickel hergestellt wird und
dass der Wickel einer Endbearbeitung zur Bildung des Treibriemens unterworfen wird.

Erfindungsgemäß wird ein Kern verwendet, der durch wenigstens zwei Bearbeitungsstationen transportiert wird, um einen Wickel herzustellen, aus dem der endlose Treibriemen oder eine Mehrzahl der endlosen Treibriemen gebildet wird. Eine der Bearbeitungsstationen ist eine Spritzgussform, in die der Kern transportiert und dort so positioniert wird, dass er zusammen mit den Formhälften die für das Spritzgießen abgedichtete Kavität für die Herstellung des Unterbaus ausbildet.

Bei dem erfindungsgemäßen Verfahren ist es möglich, auf den Kern einen Rohwickel aus der Deckschicht aus dem ersten Material und ggf. der Zugstranglage aufzubringen und dann den Transport durch die Bearbeitungsstationen vorzunehmen. Möglich ist allerdings auch, lediglich einen Vorformling aus dem ersten Material auf den Kern aufzubringen und die Bewicklung mit den Zugsträngen der Zugstranglage bereits in einer ersten Bearbeitungsstation vorzunehmen.

In einer besonders bevorzugten Ausführungsform der Erfindung wird auch die Deckschicht im Spritzgussverfahren hergestellt, sodass regelmäßig wenigstens drei Bearbeitungsstationen vorgesehen sind, von denen zwei Bearbeitungsstationen die Spritzgussformen für die Deckschicht einerseits und den Unterbau andererseits, jeweils zusammen mit dem Kern, ausbilden. Dabei kann zwischen den beiden als Spritzgussformen ausgebildeten Bearbeitungsstationen eine Wickelstation für die Zugstränge vorgesehen sein. Diese Bearbeitungsstationen können auf einem Rundtisch angeordnet sein, auf dem die entsprechende Transporteinrichtung den Transport auf einer Kreisbahn bewirkt.

In einer anderen Ausführungsform des Verfahrens kann der Kern als eine mit einer gegenüber der Länge des hergestellten Wickels sehr großen Länge aufweisenden Seele ausgebildet und in seiner Längsrichtung schrittweise mit dem Abstand zwischen den Bearbeitungsstationen entsprechenden Schritten transportiert werden, sodass er nach Durchlaufen der Bearbeitungsstationen eine Vielzahl von Wickeln trägt. Die Bearbeitungsstationen sind dann zweckmäßigerweise linear entlang der Längsrichtung des als langgestreckte Seele ausgebildeten Kerns angeordnet, wobei sich die Seele durch die Bearbeitungsstationen hindurch erstreckt.

Die Seele selbst kann als starres Element ausgebildet sein. Handhabungsvorteile ergeben sich jedoch, wenn die Seele als flexibles Element ausgebildet wird, das im Gebrauch als lineares Element versteift wird. Diese Versteifung ist dadurch möglich, dass die Seele gespannt wird. Alternativ hierzu kann als Seele auch ein Schlauch verwendet werden, der beispielsweise zum Gebrauch als Kern mit einem Fluid gefüllt wird, um auf diese Weise in Längsrichtung versteift zu werden. Als Fluid eignet sich dabei eine Gasfüllung mit einem Überdruck, vorzugsweise jedoch eine Füllung mit einer Flüssigkeit.

Als starres Element kann der Kern auch ein vom Material her steifer Schlauch, also ein Rohr, sein.

Der nach dem erfindungsgemäß hergestellte endlose Treibriemen kann eine Deckschicht aufweisen, die mit einer Gewebelage an der Oberfläche abgeschlossen ist. Die Gewebelage kann dabei auf den zylindrischen Kern aufgebracht werden, bevor die Deckschicht auf den Kern aufgebracht wird, beispielsweise durch einen Spritzgussvorgang. Selbstverständlich ist es auch möglich, bei der Vorkonfektionierung eines Rohwickels mit der Deckschicht und ggf. der Zugstranglage bereits die Gewebelage radial innen aufzubringen.

Der Unterbau des hergestellten endlosen Treibriemens kann unprofiliert oder profiliert ausgebildet werden. Eine Profilierung beim Spritzgießvorgang ist insbesondere für die Herstellung von Keilrippenriemen vorteilhaft, da dadurch Arbeitsgänge für die Ausbildung der Keilrippen eingespart werden können. Dennoch kann der erfindungsgemäß hergestellte Treibriemen in üblicher Weise nachbehandelt werden, insbesondere auch im Bereich des Angusses der im Spritzgussverfahren hergestellten Teile des Treibriemens.

Im Rahmen der Erfindung ist es selbstverständlich möglich, die genannten Bearbeitungsstationen zu ergänzen und zusätzliche Bearbeitungen vorzunehmen, beispielsweise auch ein drittes oder weiteres Spritzgießen, wenn dies beispielsweise zum Einbringen einer Klebschicht in den Bereich der Zugstränge oder für einen mehrlagigen Aufbau der Deckschicht und/oder des Unterbaus für die Konstruktion des Treibriemens sinnvoll erscheint.

Im Rahmen der vorliegenden Erfindung ist es besonders bevorzugt, wenn der Spritzgussvorgang oder die Spritzgussvorgänge, die sich über die Länge des jeweiligen Wickels erstrecken, in an sich bekannter Weise mit mehreren axial angeordneten Angüssen oder mit einem Schirmanguss durchgeführt werden. Die mehreren axial angeordneten Angüsse in Form von Ringangüssen bewirken, dass das eingespritzte Material nicht zu stark abkühlt bevor es auf an einer anderen axialen Stelle eingespritztes Material auftrifft, sodass sich eine homogene Materialverteilung ergibt und "Bindenähte" vermieden werden. Dem gleichen Zweck dient die Verwendung eines Schirmangusses, der den Vorteil hat, dass das gesamte Material stirnseitig mit einer trichterförmigen Erweiterung in die Ringkammer eingeleitet wird und sich dort gleichmäßig über den Umfang und homogen in axialer Länge verteilt. Bei dieser Angussart können Bindenähte gar nicht erst entstehen.

Die Erfindung soll im Folgenden anhand von in der Zeichnung schematisch dargestellten Ausführungsbeispielen näher erläutert werden. Es zeigen:
- Figur 1: eine schematische Darstellung einer ersten Ausführungsform des erfindungsgemäßen Verfahrens unter Verwendung zweier Spritzgussformen;
- Figur 2: eine schematische Darstellung von Verfahrensschritten eines erfindungsgemäßen Verfahrens bei der Verwendung eines vorkonfektionierten Rohwickels;
- Figur 3: eine schematische Darstellung einer zweiten Ausführungsform des erfindungsgemäßen Verfahrens mit der Verwendung von zwei Spritzgussformen und einem langgestreckten Kern für zahlreiche Wickel als Fertigungseinheiten.

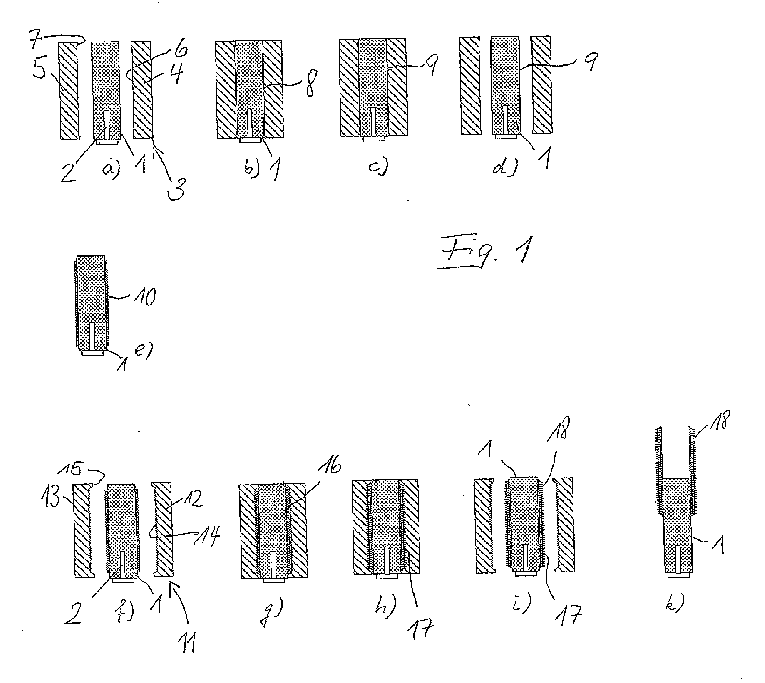

Bei dem in Figur 1 dargestellten Verfahren wird ein zylindrischer Kern 1 in Form einer Trommel auf einen Dorn 2 aufgesetzt und in eine geöffnete erste Spritzgussform 3 eingefahren, die aus zwei Formhälften 4, 5 besteht. Die Formhälften 4, 5 sind jeweils halbzylindrisch ausgebildet, sodass sie sich im geschlossenen Zustand der Form zu einem geschlossenen Hohlzylinder ergänzen.

Die Formhälften 4, 5 erstrecken sich über die gesamte Länge des Kerns 1 und wiesen Innenwände 6 auf, die über nahezu die gesamte Länge parallel zu der Außenwand des zylindrischen Kerns 1 verlaufen. Der Innendurchmesser der Innenwände 6 der Formhälften 4, 5 ist dabei etwas größer als der Außendurchmesser des kreiszylindrischen Kerns 1. An axialen Enden ist der Innendurchmesser der Formhälften 4, 5 verkleinert, sodass er gleich dem Außendurchmesser des Kerns 1 ist. An diesen Enden bilden die Innenwände ringförmige Dichtflächen 7 aus, die im geschlossenen Zustand (Figur 1b) der Spritzgussform 3 ringförmig abdichtend an dem Kern 1 anliegen. Zwischen den Dichtflächen bilden die Innenwände 6 der Formhälften 4, 5 mit dem Kern 1 eine schmale ringförmige Kavität 8 aus, die in dem in Figur 1c dargestellten Verfahrensschritt mit erstem Material zur Ausbildung einer Deckschicht 9 gefüllt wird.

Nach dem Öffnen der ersten Spritzgussform 3 (Figur 1d) wird der mit der Deckschicht 9 versehene Kern 1 in eine Station verfahren, in der er im Bereich der Deckschicht 9 mit Zugsträngen 10 bewickelt wird (Figur 1e). Die Bewicklung erfolgt vorzugsweise spiralförmig mit einer Schnur oder einem Draht aus einem geeigneten zugfesten Material, wie beispielsweise Nylon, Kevlar, gezwirnte Stofffäden o.ä.

Der so vorkonfektionierte Kern 1 wird nunmehr mittels des Dorns 2 in eine zweite geöffnete Spritzgussform 11 verfahren, die analog zu der ersten Spritzgussform 3 ebenfalls mit zwei halbzylindrischen Formhälften 12, 13 aufgebaut ist. Auch die Formhälften 12, 13 weisen Innenwände 14 auf, die an ihren axialen Enden ringförmige Dichtflächen 15 ausbilden, mit denen sie abdichtend an den entsprechenden Enden des Kerns 1 zur Anlage kommen, wenn die zweite Spritzgussform 11 geschlossen wird (Figur 1g).

Im Vergleich zu der ersten Spritzgussform 3 sind die Innenwände 14 der Formhälften 12, 13 der zweiten Spritzgussform 11 in einem etwas größeren Abstand zu dem Außendurchmesser des Kerns 1 angeordnet, sodass sich eine leere Kavität 16 im geschlossenen Zustand der zweiten Spritzgussform 11 ergibt, die radial außen von den Zugsträngen 10 einen noch leeren Raum zur Verfügung stellt. In dem dargestellten Ausführungsbeispiel sind die Innenwände 14 der Formhälften durch radiale Nuten/Rippen zum Zwecke der Formgebung profiliert. Wenn in dem in Figur 1h dargestellten Schritt die Kavität nun mit einem zweiten Material zur Ausbildung eines Unterbaus 17 gefüllt wird, ergibt sich eine Formung des Unterbaus eines Treibriemens entsprechend der Profilierung der Innenwände 14. Selbstverständlich lassen sich mit dem erfindungsgemäßen Verfahren aber auch Flachriemen herstellen, die keinen profilierten Unterbau aufweisen. In diesem Fall sind die Innenwände 14 nicht profiliert.

Nach dem Öffnen der zweiten Spritzgussform 11 (Figur 1i) wird der auf dem Kern 1 gebildete Aufbau als Wickel 18 von dem Kern 1 abgezogen (Fig. 1k). Der Wickel 18 wird im Allgemeinen in einer Länge hergestellt, die der Breite zahlreicher Treib-riemen entspricht. In Figur 1 ist eine Profilierung über die Länge des Wickels 18 angedeutet, bei der jede Erhebung beispielsweise einem Keilriemen entspricht. Dementsprechend wird der Wickel 18 durch Schnitte senkrecht zu seiner Längsrichtung in entsprechend viele Treibriemen geschnitten. Selbstverständlich können dabei auch Treibriemen hergestellt werden, die jeweils mehrere parallel zueinander angeordnete Keil-Unterbauten enthalten.

Aus Figur 1 ist ersichtlich, dass der Aufbau des Keilriemens in einer der Gebrauchsstellung umgekehrten Weise erfolgt, da die bei der Herstellung radial innen aufgebrachte Deckschicht 9 im Gebrauch radial außen verläuft, während der bei der Herstellung radial außen aufgebrachte Unterbau 17 radial innen verläuft.

Durch übliche Herstellungsmethoden in Spritzgussverfahren kann der dargestellte grundsätzliche Aufbau eines Wickels 18 - und damit eines Treibriemens - ergänzt werden, beispielsweise durch eine textile Abdeckung der Deckschicht oder die Aufbringung einer Verschleißschicht auf den Unterbau. Die Abdeckung der Deckschicht ist beispielsweise dadurch möglich, dass eine entsprechende Lage auf den Kern 1 gewickelt wird, bevor die Deckschicht 9 in dem Schritt gemäß Figur 1c hergestellt wird. In entsprechender Weise können die Innenwände der Formhälften 12, 13 mit einem geeigneten Material, beispielsweise einer Folie, ausgekleidet werden, um auf den Unterbau 17 eine abschließende Schicht aufzubringen.

Figur 1 lässt insgesamt erkennen, dass alle Verfahrensschritte mit dem auf den Dorn 2 aufgesetzten Kern 1 durchgeführt werden, der mit den Formhälften 4, 5 zur Ausbildung der Kavität 8 bzw. mit den Formhälften 12, 13 zur Ausbildung der Kavität 16 zusammenwirkt. Der Dorn 2 wird mit dem aufgesetzten Kern 1 im Wesentlichen in vier Bearbeitungsstationen verfahren, wobei die erste Spritzgussform 3 die erste Bearbeitungsstation beinhaltet, die zweite Bearbeitungsstation durch das Aufwickeln der Zugstränge 10 gebildet wird, die dritte Bearbeitungsstation die zweite Spritzgussform 11 beinhaltet und die vierte Bearbeitungsstation zum Entformen des Wickels 18 von dem Kern 1 dient. Der Transport des Kerns 1 ist mit dem Dorn 2 durch einfaches Verfahren möglich, beispielsweise auch auf einem Rundtisch mit vier Bearbeitungsstationen.

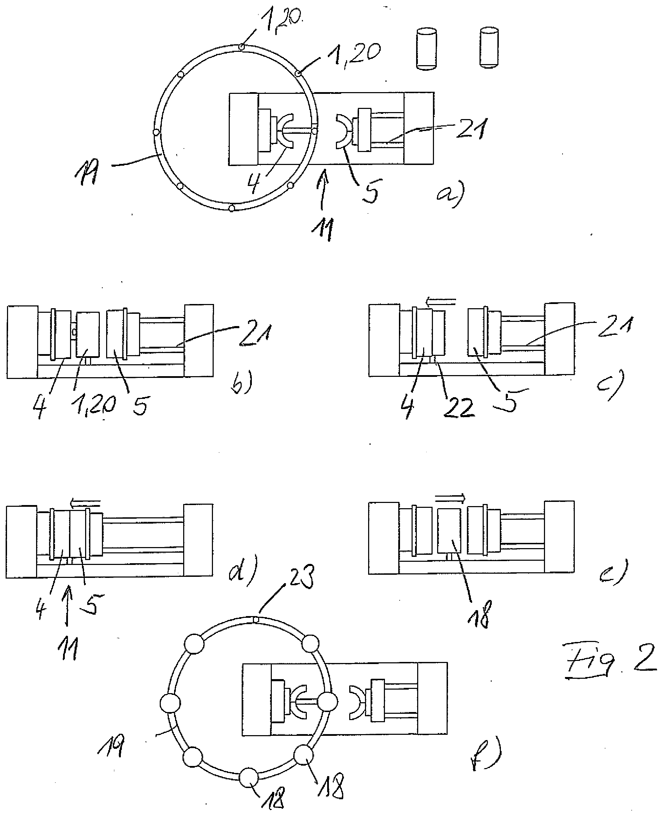

Figur 2 verdeutlicht ein erfindungsgemäßes Verfahren, bei dem ein Transport von Kernen 1 auf einem kreisförmigen Transportweg 19 erfolgt, auf dem in gleichmäßigen Abständen (hier nicht erkennbare) Dorne 2 zur Aufnahme der aufrecht stehenden Kerne 1 vorgesehen sind. Auf die Kerne 1 sind bereits vorkonfektionierte Rohwickel 20 aufgebracht, die die Deckschicht 9 und die Zugstränge 10 (in Figur 2 nicht im Einzelnen dargestellt) aufweisen. Figur 2a verdeutlicht die Spritzgussform 11 für die Aufbringung des Unterbaus 17. In der in Figur 2a dargestellten Stellung sind die beiden Formhälften 4, 5 auseinandergefahren und einer der Kerne 1 mit dem Rohwickel 20 ist mittig zwischen den beiden Formhälften 4, 5 positioniert. In der in Figur 2 dargestellten Ausführungsform ist die eine Formhälfte 4 ortsfest angeordnet, während die andere Formhälfte 5 mittels eines Linearantriebs 21 in Richtung auf die andere Formhälfte 4 verschiebbar ist.

Figur 2b zeigt in einer Seitenansicht die Positionierung des Kerns 1 mit dem Rohwickel 20 zwischen den geöffneten Formhälften 4, 5.

Gemäß Figur 2c ist in der mittigen Position zwischen den Formhälften 4, 5 der Kern 1 mit dem Rohwickel 20 in die ortsfeste Formhälfte 4 auf einer Linearführung 22 verfahrbar.

Im Verfahrensschritt der Figur 2d wird nun die verfahrbare Formhälfte 5 so verfahren, dass die Spritzgussform 11 geschlossen wird. In dieser Stellung wird das Material für den Unterbau 17 eingespritzt, sodass der Unterbau als Mantellage auf den Kern 1 mit dem Rohwickel 20 aufgebracht wird. Auf diese Weise ist der Wickel 18, der nunmehr den Unterbau 17 aufweist, fertiggestellt und die Form wird gemäß Figur 2e geöffnet.

Figur 2f verdeutlicht, dass auf diese Weise mehrere Wickel auf dem Transportweg 19 in gleichmäßigen Abständen hintereinander angeordnet sind, die während der nachfolgenden Verfahrensschritte abgekühlt und ggf. bearbeitet werden können.

An einer Entnahmeposition 23 kann der Wickel 18 von dem Kern 1 abgezogen oder der Kern 1 mit dem Wickel 20 abgenommen werden, um die Entformung von Kern 1 und Wickel 18 separat vorzunehmen.

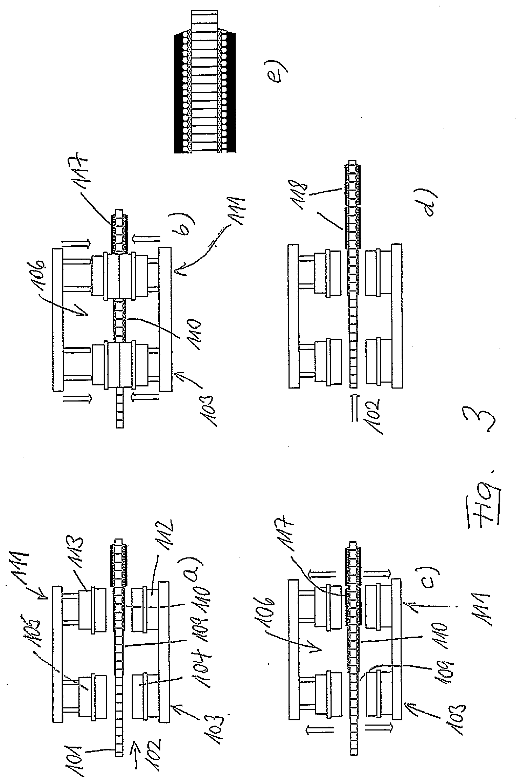

Figur 3 zeigt eine zweite Ausführungsform der Erfindung, bei der ein Kern 101 als langgestreckter - für praktische Zwecke endloser - Träger, vorzugsweise in Form eines Schlauches ausgebildet ist, der in einer durch einen Pfeil 102 angedeuteten Transportrichtung schrittweise transportierbar ist. Auf dem Transportweg gelangt der Kern 101 zunächst in eine erste Spritzgussform 103, die wiederum aus zwei Formhälften 104, 105 besteht, die zum Schließen der Form 103 aufeinander verfahrbar sind und dabei den Kern 101 umschließen. Wiederum dient die erste Spritzgussform 103 dem Aufbringen einer Deckschicht 109 auf den Kern 101, und zwar in einer durch die Formhälften 104, 105 vorgegebenen Länge. An die erste Spritzgussform 103 schließt sich eine (nicht näher dargestellte) Wickelvorrichtung 106 an, mit der Zugstränge 110 auf die aufgebrachte Deckschicht 109 in derselben Länge aufgewickelt werden. In Transportrichtung schließt sich an die Wickelvorrichtung 106 eine zweite Spritzgussform 111 an, die aus zwei Formhälften 112, 113 besteht. Die beiden Spritzgussformen 103 und 111 weisen den prinzipiell gleichen Aufbau wie die Spritzgussformen 3 und 11 auf, die anhand der Figur 1 beschrieben worden sind. Die dort beschriebenen Dichtflächen 7 und 15 wirken in gleicher Weise mit dem Kern 101 zusammen, umgreifen den Kern 101 also abdichtend als Abschluss der durch die Formhälften 104, 105 bzw. 112, 113 ausgebildeten Kavitäten für die Deckschicht 109 bzw. einen Unterbau 117.

Die drei hintereinander angeordneten Bearbeitungsstationen, gebildet aus der ersten Spritzgussform 103, der Wickelvorrichtung 106 und der zweiten Spritzgussform 111 arbeiten gleichzeitig und taktsynchron.

Figur 3a zeigt einen ersten Arbeitstakt, in dem die beiden Spritzgussformen 103 und 111 geöffnet sind, sodass der Kern transportiert werden kann. Dadurch gelangt eine in der ersten Spritzgussform 103 hergestellte Deckschicht 109 in den Bereich der Wickelvorrichtung und ein Abschnitt des Kerns 101, auf dem bereits Zugstränge 110 aufgewickelt sind, gelangt in den Bereich der zweiten Spritzgussform 111. Nach diesem Transporttakt (Figur 3a) findet ein Arbeitstakt (Figur 3b) statt, in dem die beiden Spritzgussformen 103 und 111 geschlossen werden und die Wickelvorrichtung 106 zum Aufwickeln von Zugsträngen 110 aktiviert wird. In der ersten geschlossenen Spritzgussform 103 wird der entsprechende Bereich mit einer Deckschicht 9 im Spritzgussverfahren versehen, während in der zweiten Spritzgussform 111 auf die gewickelten Zugstränge 110 der Unterbau 117 aufgespritzt wird.

Figur 3c zeigt den entsprechenden Zustand am Ende des Arbeitstakts der Figur 3b, wenn die beiden Spritzgussformen 103 und 111 geöffnet werden. Im Bereich der ersten Spritzgussform 103 ist die Deckschicht 109 aufgebracht, im Bereich der Wickelvorrichtung 106 sind die Zugstränge 110 aufgewickelt und im Bereich der zweiten Spritzgussform 111 ist der Unterbau 117 aufgebracht. Beim Weitertransport in Richtung des Pfeils 102 um einen Transportschritt ergibt sich der Zustand gemäß Figur 3d. Es ist erkennbar, dass in den drei Bearbeitungsstationen 103, 106, 111 der dreistufige Aufbau der Wickel 118 komplettiert wird, sodass aus den Bearbeitungsstationen der Kern 101 mit sequenziell aufgebrachten Wickeln 118 austritt, wie dies in Figur 3d verdeutlicht ist. Die Wickel 118 werden in bekannter Technik vom Kern 101 abgezogen und stehen für die Herstellung entsprechend konfektionierter Treibriemen zur Verfügung.

Das anhand der Figur 3 dargestellte Verfahren unterscheidet sich von dem Verfahren gemäß Figur 1 prinzipiell nicht, beruht lediglich auf einem anderen Transportmechanismus zwischen den Bearbeitungsstationen.

## Patentansprüche

1. Verfahren zur Herstellung eines ringförmigen, in einer Laufrichtung endlosen Treibriemens mit einer radial äußeren Deckschicht (9, 109) aus einem ersten Material, einer Zugstranglage mit in Laufrichtung ausgerichteten Zugsträngen (10, 110) und einem aus einem zweiten Material, das ein Elastomer ist, bestehenden Unterbau (17, 117), der zur Anlage an passenden Scheiben eines Antriebs ausgebildet ist, wobei zunächst die Zugstränge (10, 110) auf das erste Material aufgebracht werden und anschließend der Unterbau (17, 117) aus dem zweiten Material in einer Spritzgussform (11, 111) geformt und vernetzt wird, wobei ein Kern (1, 101) mit einer Transporteinrichtung verbunden wird,
auf den Kern (1, 101) die Deckschicht (9, 109) und die Zugstränge (10, 110) der Zugstranglage aufgebracht werden,
mit der Transporteinrichtung der Kern (1, 101) schrittweise in wenigstens zwei Bearbeitungsstationen transportiert wird,
eine der Bearbeitungsstationen die Spritzgussform (11, 111) ist, die mit zwei halbkreisförmigen, beiderseits des eingeführten Kerns (1, 101) positionierten zylindrischen Formhälften (12, 13; 112, 113) mit an ihren axialen Enden angebrachten halbringförmigen Dichtflächen (15, 115) gebildet ist,
durch das Schließen der Spritzgussform (11, 111) die Dichtflächen (5, 115) abdichtend an entsprechenden Dichtflächen des Kerns (1, 101) dichtend angelegt werden, wodurch eine Kavität (16) zur Bildung des Unterbaus (17, 117) gebildet wird,
durch Spritzgießen des zweiten Materials in die Kavität (16) ein den Unterbau (17, 117) aufweisender Wickel (18, 118) hergestellt wird und
der Wickel (18, 118) einer Endbearbeitung zur Bildung des Treibriemens unterworfen wird.

2. Verfahren nach Anspruch 1, **dadurch gekennzeichnet, dass** der Kern (1) eine zylindrische Trommel ist, der auf einer Stirnseite mit einem Transportdorn (2) der Transporteinrichtung verbunden wird.

3. Verfahren nach Anspruch 1, **dadurch gekennzeichnet, dass** der Kern (101) als eine mit einer gegenüber der Länge des hergestellten Wickels (118) sehr großen Länge aufweisende Seele ausgebildet wird und in seiner Längsrichtung schrittweise mit dem Abstand zwischen den Bearbeitungsstationen entsprechenden Schritten transportiert wird, sodass er nach Durchlaufen der Bearbeitungsstationen eine Vielzahl von Wickeln (118) trägt.

4. Verfahren nach einem der Ansprüche 1 bis 3, **dadurch gekennzeichnet, dass** auch die Deckschicht (9, 109) in einer Spritzgussform (3,103) durch Aufbringen auf den Kern (1, 101) hergestellt wird.

5. Verfahren nach einem der Ansprüche 1 bis 4, **dadurch gekennzeichnet, dass** als Bearbeitungsstationen wenigstens eine erste Spritzgussform (3, 103), eine Wickelstation (106) für die Zugstränge (10, 110) und eine zweite Spritzgussform (11, 111) verwendet werden.

6. Verfahren nach einem der Ansprüche 1 bis 5, **dadurch gekennzeichnet, dass** die Bearbeitungsstationen auf einem Rundtisch angeordnet werden.

7. Verfahren nach einem der Ansprüche 3 bis 6, **dadurch gekennzeichnet, dass** die Bearbeitungsstationen linear entlang der Längsrichtung des als langgestreckte Seele ausgebildeten Kerns (101) angeordnet sind und dass sich die Seele durch die Bearbeitungsstationen hindurch erstreckt.

8. Verfahren nach Anspruch 7, **dadurch gekennzeichnet, dass** die Seele als starres Element ausgebildet wird.

9. Verfahren nach Anspruch 7, **dadurch gekennzeichnet, dass** die Seele als flexibles Element ausgebildet wird, das gespannt wird.

10. Verfahren nach Anspruch 9, **dadurch gekennzeichnet, dass** als Seele ein Schlauch verwendet wird.

11. Verfahren nach Anspruch 10, **dadurch gekennzeichnet, dass** der Schlauch mit einem Fluid zum Gebrauch als Kern (101) gefüllt wird.

## Claims

1. Method for producing a transmission belt in the form of a continuous ring in a running direction, with a radially outer cover layer (9, 109) of a first material, a tensile strand layer, with tensile strands (10, 110) aligned in the running direction, and a substructure (17, 117), which consists of a second material, which is an elastomer, and is designed for bearing against matching pulleys of a drive, wherein first the tensile strands (10, 110) are applied to the first material and then the substructure (17, 117) is formed from the second material in an injection mould (11, 111) and crosslinked, wherein a core (1, 101) is connected to a transporting device, the cover layer (9, 109) and the tensile strands (10, 110) of the tensile strand layer are applied to the core (1, 101), the core (1, 101) is transported by the transporting device step by step into at least two processing stations, one of the processing stations is the injection mould (11, 111), which is formed by two semicircular, cylindrical mould halves (12, 13; 112, 113), which are positioned on both sides of the inserted core (1, 101) and have semi-annular sealing surfaces (15, 115) provided at their axial ends, the sealing surfaces (5, 115) are applied in a sealing manner by the closing of the injection mould (11, 111) to corresponding sealing surfaces of the core (1, 101) so as to seal them off, whereby a cavity (16) for forming the substructure (17, 117) is formed, a coil (18, 118) comprising the substructure (17, 117) is produced by injection-moulding of the second material in the cavity (16) and the coil (18, 118) is subjected to a finishing process to form the transmission belt.

2. Method according to Claim 1, **characterized in that** the core (1) is a cylindrical drum, which is connected at one end face to a transporting mandrel (2) of the transporting device.

3. Method according to Claim 1, **characterized in that** the core (101) is formed as a core of a very great length, as compared to the length of the coil (118) produced, and is transported step by step in its longitudinal direction with steps corresponding to the distance between the processing stations, so that, after passing through the processing stations, it bears a multiplicity of coils (118).

4. Method according to one of Claims 1 to 3, **characterized in that** the cover layer (9, 109) is also produced in an injection mould (3, 103) by being applied to the core (1, 101).

5. Method according to one of Claims 1 to 4, **characterized in that** at least a first injection mould (3, 103), a winding station (106) for the tensile strands (10, 110) and a second injection mould (11, 111) are used as processing stations.

6. Method according to one of Claims 1 to 5, **characterized in that** the processing stations are arranged on a round table.

7. Method according to one of Claims 3 to 6, **characterized in that** the processing stations are arranged linearly along the longitudinal direction of the core (101), formed as an elongated core, and **in that** the core extends through the processing stations.

8. Method according to Claim 7, **characterized in that** the core is formed as a rigid element.

9. Method according to Claim 7, **characterized in that** the core is formed as a flexible element which is tensioned.

10. Method according to Claim 9, **characterized in that** a tube is used as the core.

11. Method according to Claim 10, **characterized in that**, for use as the core (101), the tube is filled with a fluid.

## Revendications

1. Procédé de fabrication d'une courroie de transmission de forme annulaire continue dans une direction de marche, avec une couche de revêtement radialement extérieure (9, 109) issue d'un premier matériau, une épaisseur de brins de traction avec des brins de traction (10, 110) agencés dans une direction de marche, et une sous-structure (17, 117) composée d'un deuxième matériau qui est un élastomère, qui est formée pour venir en appui sur des disques appropriés d'un entraînement, dans lequel les brins de traction (10, 110) sont d'abord appliqués sur le premier matériau, et ensuite la sous-structure (17, 117) est formée et réticulée à partir du deuxième matériau dans un moule d'injection (11, 111),
dans lequel un noyau (1, 101) est relié à un dispositif de transport,
la couche de revêtement (9, 109) et les brins de traction (10, 110) de l'épaisseur de brins de traction sont appliqués sur le noyau (1, 101),
le noyau (1, 101) est transporté avec le dispositif de transport par étapes dans au moins deux stations de transformation,
une des stations de transformation est le moule d'injection (11, 111) qui est formé de deux moitiés de moule cylindriques semi-circulaires (12, 13 ; 112, 113) positionnées des deux côtés du noyau inséré (1, 101) avec des surfaces d'étanchéité (15, 115) de forme semi-annulaire appliquées à leurs extrémités axiales,
les surfaces d'étanchéité (5, 115) sont appliquées de manière étanche au niveau des surfaces d'étanchéité correspondantes du noyau (1, 101) par la fermeture étanche du moule d'injection (11, 111), ce qui forme une cavité (16) pour former la sous-structure (17, 117),
le moulage par injection du deuxième matériau dans la cavité (16) crée un enveloppement (18, 118) présentant la sous-structure (17, 117), et l'enveloppement (18, 118) est soumis à une transformation finale destinée à former la courroie de transmission.

2. Procédé selon la revendication 1, **caractérisé en ce que** le noyau (1) est un tambour cylindrique qui est relié sur une face avant à une broche de transport (2) du dispositif de transport.

3. Procédé selon la revendication 1, **caractérisé en ce que** le noyau (101) est formé comme une âme présentant une longueur très grande par rapport à la longueur de l'enveloppement réalisé (118) et est transporté dans sa direction longitudinale par étapes avec la distance entre les étapes correspondant aux stations de transformation, de sorte qu'il porte une pluralité d'enveloppements (118) après être passé par les stations de transformation.

4. Procédé selon l'une des revendications 1 à 3, **caractérisé en ce que** la couche de revêtement (9, 109) est également réalisée dans un moule d'injection (3, 103) par application sur le noyau (1, 101).

5. Procédé selon l'une des revendications 1 à 4, **caractérisé en ce qu'**on utilise comme station de transformation au moins un premier moule d'injection (3, 103), une station d'enveloppement (106) pour les brins de traction (10, 110) et un deuxième moule d'injection (11, 111).

6. Procédé selon l'une des revendications 1 à 5, **caractérisé en ce que** les stations de transformation sont agencées sur une table ronde.

7. Procédé selon l'une des revendications 3 à 6, **caractérisé en ce que** les stations de transformation sont agencées de manière linéaire le long de la direction longitudinale du noyau (101) formé comme âme allongée, et **en ce que** l'âme s'étend à travers les stations de transformation.

8. Procédé selon la revendication 7, **caractérisé en ce que** l'âme est formée comme un élément rigide.

9. Procédé selon la revendication 7, **caractérisé en ce que** l'âme est formée comme un élément flexible qui est mis sous tension.

10. Procédé selon la revendication 9, **caractérisé en ce qu'**on utilise un tuyau comme âme.

11. Procédé selon la revendication 10, **caractérisé en ce que** le tuyau est rempli avec un fluide pour être utilisé comme noyau (101).
